# EUROPÄISCHE PATENTSCHRIFT

(11) **EP 1 670 658 B1**
(45) Veröffentlichungstag und Bekanntmachung des Hinweises auf die Patenterteilung: **18.02.2009**
(21) Anmeldenummer: 04766675.5
(22) Anmeldetag: 02.09.2004
(51) Int. Cl.: B60K 5/12, F16C 7/04, F16F 1/50, F16F 3/093

(54) **PENDELSTÜTZE**
PENDULUM SUPPORT
SUPPORT PENDULAIRE

(30) Priorität: 08.09.2003 DE 10342032
(43) Veröffentlichungstag der Anmeldung: 21.06.2006
(73) Patentinhaber: Trelleborg Automotive Technical Centre GmbH, 56203 Höhr-Grenzhausen (DE)
(72) Erfinder: GRAEVE, Arndt, 56072 Koblenz (DE); HOFMANN, Manfred, 65597 Hünfelden (DE)
(74) Vertreter: Preissner, Nicolaus
(86) Internationale Anmeldenummer: PCT/EP2004/051996
(87) Internationale Veröffentlichungsnummer: WO 2005/025909

(56) Entgegenhaltungen:
- EP-A- 0 430 620
- EP-A- 0 849 491
- DE-A- 4 441 219
- FR-A- 1 563 989
- FR-A- 2 111 845
- FR-A- 2 703 414
- GB-A- 506 958
- US-A- 4 406 344
- US-A- 4 706 946

## Beschreibung

Die Erfindung betrifft eine Pendelstütze insbesondere zur Abstützung eines Motoraggregats, mit zwei voneinander beabstandeten Befestigungsmitteln zur Verbindung von zwei relativ zueinander beweglichen Körpern, wobei die Befestigungsmittel elastisch miteinander verbunden sind.

Pendelstützen kommen insbesondere als Drehmomentenstützen zum Einsatz und stützen die von einem Motor übertragenen Kräfte an mindestens einer Stelle der Motoraufhängung ab. Derartige Pendelstützen bestehen üblicherweise aus einem möglichst steifen metallischen Bauteil, wobei an den Enden Aussparungen angeordnet sind, in die gummielastische Elemente zur Aufnahme von Befestigungsmitteln eingesetzt werden. Die Hauptaufgabe dieser Pendelstützen besteht neben dem Abstützen der maximalen Kräfte in der Isolation des Lagerpunktes. Zur Isolation des Lagerpunktes werden insbesondere nachgiebige Elastomerkörper verwendet, die nach einem definierten linearen Freiweg in eine Progression gehen und den Lagerpunkt statisch und/oder dynamisch versteifen. Dadurch wird die akustische Isolation drastisch verringert.

Die DE 19631893 A1 beschreibt eine Pendelstütze der eingangs genannten Art, bei der ein Stützarm zwischen zwei Gehäusen angeordnet ist, wobei ein Gehäuse mit dem Stützarm verbunden ist und eine Innenöffnung aufweist, in die eine Innenhülse eingeführt ist, die von einem Elastomerkörper in dem Gehäuse gestützt wird. Der Elastomerkörper ist in das Gehäuse einvulkanisiert und mit diesem stoffschlüssig verbunden.

Die DE 4 441 219 C2 zeigt eine Kunststoff-Pendelstütze, die sich aus zwei getrennt hergestellten Teilen aufbaut. Hierbei ist wenigstens ein Teil schalenförmig ausgebildet, so dass im zusammengesetzten Zustand ein geschlossenes Hohlprofil gebildet wird. Die Teile sind mittels einer Fügetechnik, insbesondere Kleben, Schweißen oder Formschluss miteinander verbunden.

In der EP 0 849 491 A2 wird eine Pendelstütze beschrieben, deren Grundkörper aus zwei sich gegenüberliegend angeordneten Teilen gebildet wird, die durch Vulkanisation miteinander verbunden sind. An dem Grundkörper sind Gehäuse ausgebildet, an denen jeweils eine Innenhülse mittels eines Elastomerkörpers elastisch gelagert ist.

Weitere relevante Pendelstützen sind aus Dokumenten FR1563989, FR2703414, FR2111845 bekannt.

Bei den vorstehend beschriebenen Pendelstützen ist die Nachgiebigkeit und die Frei- oder Federwege zwischen den Lagerpunkten relativ gering.

Vor diesem Hintergrund ergibt sich die **Aufgabe** der Erfindung, eine Pendelstütze anzugeben, die maximale Freiwege ermöglicht und kostengünstig herstellbar ist.

Zur **Lösung** der genannten Aufgabe wird bei einer Pendelstütze der eingangs genannten Art vorgeschlagen, dass der Grundkörper zwei Grundkörperelemente aufweist, dass die Grundkörperelemente über mindestens ein elastisches Schubelement verbunden sind und dass mindestens eines der Grundkörperelemente eine Aussparung auf weist, in der ein Bereich des anderen Grundkörperelements mit Freiweg einliegt.

Durch die erfindungsgemäße Pendelstütze wird eine große Auslenkung der Grundkörperelemente relativ zueinander ermöglicht. Die Erfindung basiert auf der Erkenntnis, dass der Grundkörper durch das Vorsehen eines Schubelements elastisch ausgebildet wird, wodurch große Federwege erzielt werden können. Das Schubelement weist hierbei eine ausreichend große Grundfläche und Höhe auf, die entsprechend dem gewünschten Federweg und der gewünschten Steifigkeit ausgelegt wird. Die erfindungsgemäße Pendelstütze zeichnet sich durch eine schmale Bauweise aus und ist kostengünstig herstellbar.

Vorteilhafte Ausgestaltungen der Pendelstütze ergeben sich aus den Unteransprüchen.

Vorteilhaft ist der in der Aussparung einliegende Bereich als Aufnahmegehäuse für das Befestigungsmittel ausgebildet.

In vorteilhafter Ausgestaltung der Erfindung weist das Grundkörpe relement eine im wesentlichen ebene Grundfläche auf, von der ein Aufnahmegehäuse senkrecht abragt.

In einer weiteren vorteilhaften Ausgestaltung der Erfindung sind die Grundkörperelemente baugleich ausgebildet. Dadurch lassen sich geringe Fertigungskosten erzielen.

Vorteilhaft weist jedes Grundkörperelement eine Aussparung auf, in der ein Bereich des gegenüberliegenden Grundkörperelements mit Freiweg einliegt. Der Freiweg wird über einen zwischen dem einliegenden Bereich und dem Rand der Aussparung vorgesehenen Freiraum erhalten. Über diesen Freiraum ist die Auslenkung des anderen Grundkörperelements einstellbar. Die Aussparungen lassen sich in ihrer Größe an die Einsatzbedingungen anpassen, wobei mit einer großen Aussparung für das gegenüberliegende Grundkörperelement ein großer Freiweg geschaffen wird, so dass die beiden Grundkörperelemente zueinander sehr weit ausgelenkt werden können. Bei einer kleinen Aussparung ist der Freiweg sehr gering und eine Auslenkung der beiden Grundkörperelemente zueinander wird stark begrenzt.

In einer weiteren Ausgestaltung der Erfindung ist eine Abwinklung des Grundkörperelements im Bereich der Aussparung vorgesehen, wo bei diese Abwinklung einen Anschlag für das gegenüberliegende Grundkörperelement bildet.

Gemäß einer vorteilhaften Ausführungsform sind das Schubelement und ein Tragkörper, der das Befestigungsmittel elastisch abstützt, an einem eingespritzten Vulkanisationskörper aus elastischem Material ausgebildet. Dadurch lassen sich durch einen einzigen Vulkanisationsvorgang die beiden Grundkörperelemente miteinander über das Schubelement verbinden und eine elastische Befestigung der Befestigungsmittel durch die Tragkörper in den Aufnahmegehäusen herstellen.

Durch die einfache Ausgestaltung der beiden Grundkörperelemente ist es möglich, die Grundkörperelemente mittels eines Tiefziehverfahrens herzustellen, so dass niedrige Kosten bei der Herstellung der Grundkörperelemente erzielt werden. Eine besonders kostengünstige Herstellung lässt sich bei der Verwendung von baugleichen Grundkörperelementen erzielen.

In einer weiteren vorteilhaften Ausgestaltung der Erfindung wird in das Aufnahmegehäuse des Grundkörperelements eine hohlzylindrische Hülse eingesetzt, die als Befestigungsmittel dient und vom elastischen Tragkörper im Aufnahmegehäuse abgestützt wird.

Vorteilhaft sind die Grundkörperelemente mit einer Ummantelung aus elastischem Material versehen, wobei diese Ummantelung als Korrosion sschutz dient.

Nachfolgend wird die Erfindung anhand von Ausführungsbeispielen näher erläutert, die in den Zeichnungen in schematischer Weise dargestellt sind. Es zeigen:
- Fig. 1: einen Vertikalschnitt durch eine erste Ausführungsform einer erfindungsgemäßen Pendelstütze;
- Fig. 2: eine Ansicht von oben auf eine erfindungsgemäße Pendelstüt- ze gemäß Figur 1;
- Fig. 3: einen Vertikalschnitt durch eine alternative Ausgestaltung einer erfindungsgemäßen Pendelstütze;
- Fig. 4: eine Ansicht aus Richtung des Pfeiles IV der Pendelstütze ge- mäß Figur 3.

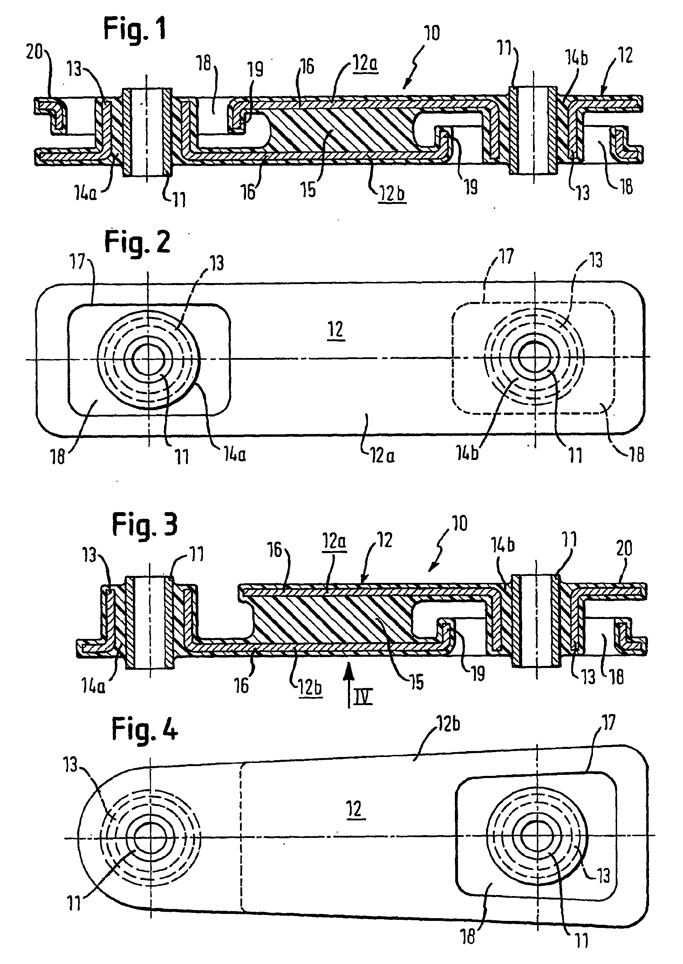

Figur 1 zeigt eine erfindungsgemäße Pendelstütze 10, die aus einem Grundkörper 12 gebildet wird, der zwei Befestigungsmittel 11 aufweist. Der Grundkörper 12 setzt sich aus zwei baugleichen, jeweils als Schale ausgebildeten Grundkörperelementen 12a, 12b zusammen, die gegenüberliegend angeordnet sind. Die Grundkörperelemente 12a und 12b weisen im wesentlichen ebene rechteckförmige Grundflächen 16 auf. Zwischen den gegenüberliegenden Grundkörperelementen 12a, 12b ist ein elastomeres Schubelement grossflächig anvulkanisiert. Jedes Grundkörperelement 12a, 12b enthält ein Aufnahmegehäuse 13, das sich senkrecht zu der ebenen Grundfläche 16 erstreckt. In die Aufnahmegehäuse 13 werden die Befestigungsmittel 11 eingesetzt und jeweils von einem elastischen Tragkörper 14a, 14b im Grundkörperelement 12a, 12b abgestützt. Die Befestigungsmittel 11 sind als hohlzylindrische Lagerbuchsen ausgebildet und dienen der Befestigung von zwei relativ zueinander beweglichen Körpern. Dies kann ein Motor auf der einen Seite und auf der anderen Seite eine Karosserie eines Fahrzeugs sein. Weiter weisen die Grundkörperelemente 12a, 12b jeweils eine Aussparung 17 auf, in die das gegenüberliegende Grundkörperelement 12a, 12b mit seinem Aufnahmegehäuse 13 und dem darin gelagerten Befestigungsmittel 11 eingreift. Die Aussparung 17 und das eingreifende Aufnahmegehäuse 13 des gegenüberliegenden Grundkörperelements bilden dabei jeweils einen Freiraum 18, der je nach Einsatzbereich unterschiedlich groß dimensioniert sein kann. Zur Begrenzung der horizontalen Auslenkung der Grundkörperelemente 12a, 12b ist vorgesehen, an dem Grundkörperelement 12a, 12b im Bereich der Aussparung 17 eine Abwinklung 19 vorzusehen. Diese Abwinklung 19 dient als Anschlag für das Aufnahmegehäuse 13 bei Auslenkung in horizontaler Richtung. Der Grundkörper 12 ist von einer Ummantelung 20 aus elastischem Material zu Zwecken des Korrosionsschutzes überzogen. Es ist möglich, die elastischen Tragkörper 14, das Schubelement 15 als auch die Ummantelung 20 der Grundkörperelemente 12a, 12b in einem einzigen Vulkanisationsvorgang herzustellen.

In Figur 2 ist eine Ansicht der in Figur 1 dargestellten Pendelstütze von oben gezeigt. Dabei sind Aussparungen 17 dargestellt, in denen die von unten/oben in diese Aussparungen 17 hineinragende Aufnahmegehäuse 13 mit den darin befestigten Lagerbuchsen 11 dargestellt sind. Durch die Aussparung 17 wird eine Bewegung der Aufnahmegehäuse 13 des gegenüberliegenden Grundkörperelements 12a, 12b in beide Dimensionen in der horizontalen Ebene ermöglicht. Sowohl in Figur 1 als auch in Figur 2 wird deutlich, dass die Grundkörperelemente 12a und 12b baugleich ausgebildet sind, wodurch sich geringe Herstellungskosten erzielen lassen.

Durch die zweiteilige Ausgestaltung der Pendelstütze wird es ermöglicht, die Grundkörperelemente in einem Tiefziehverfahren aus Metallblechen herzustellen, wodurch geringe Herstellungskosten entstehen.

Eine alternative Ausgestaltung einer erfindungsgemäßen Pendelstütze 10 ist in Figur 3 dargestellt. Diese Pendelstütze 10 besteht aus einem Grundkörper 12, der im wesentlichen ebene Grundflächen 16 aufweist und sich aus zwei gegenüberliegend angeordneten Grundkörperelementen 12a und 12b zusammensetzt, wobei in diesem Ausführungsbeispiel die Grundkörperelemente 12a und 12b nicht baugleich ausgestaltet sind. In diesem Ausführungsbeispiel ist nur in der Aussparung 17 des unten angeordneten Grundkörperelements 12b eine Abwinklung 19 vorgesehen, die als Anschlag für das Aufnahmegehäuse 13 des gegenüberliegenden oben liegenden Grundkörperelements 12a dient.

In Figur 4 ist die Pendelstütze gemäß Figur 3 in einer Ansicht aus Richtung des Pfeils IV dargestellt. Die Grundkörperelemente 12a, 12b weisen eine schräg verlaufende Außenkontur auf, wobei dies durch konstruktive Erfordernisse im Bauraum des Fahrzeugs bedingt sein kann.

Sowohl in der Figur 1 als auch in der Figur 3 ist dargestellt, dass die Grundkörperelemente 12a und 12b vollständig von einer Ummantelung 20 ummantelt werden, wodurch ein umfassender Korrosionsschutz für die Pendelstütze 10 erreicht werden kann.

Durch die zweiteilige Ausgestaltung der Pendelstütze 10 mit den beiden gegenüberliegenden Grundkörperelementen 12a, 12b wird es ermöglicht, eine maximale Auslenkung der beiden Grundkörperelemente 12a, 12b mit den darin befestigten Befestigungsmitteln 11 in Form von Lagerbuchsen zu erreichen. Eine derart große horizontale Auslenkung wird durch das dazwischen angeordnete Schubelement 15 ermöglicht.

Das Schubelement 15 wird großflächig zwischen den Grundkörperelementen 12a, 12b angehaftet und anvulkanisiert. Auf einer Seite eines Grundkörperelements 12a, 12b wird ein Befestigungsmittel 11 von dem elastischen Tragkörper 14 gehalten, wobei auf der anderen Seite des Grundkörperelements 12a, 12b eine Aussparung 17 vorgesehen ist, die Anschläge für das Aufnahmegehäuse des gegenüberliegenden Grundkörperelements 12a, 12b bildet, wobei zur Verringerung des Bauraums auch nur ein Anschlagbereich bei einem Grundkörperelement 12a, 12b ausgebildet sein kann.

Durch die voll angehafteten Elastomerstrukturen des Schubelements 15 und der Tragkörper 14 lassen sich maximale horizontale Auslenkungen erre i-chen. Gleichzeitig wird ein Grundkörper 12 für die Pendelstütze 10 ermö g-licht, der eine sehr schmale Bauweise aufweist. Je nach Ausführung des Vulkanisats zur Bildung des Schubelements 15 und der Tragkörper 14 lassen sich unterschiedliche Steifigkeiten einstellen. Durch die Form der Grundkörperelemente 12a, 12b kann eine erfindungsgemäße Pendelstütze 10 sehr hohe Kräfte und Drehmomente aufnehmen. Durch die Aussparungen 17 in jedem Grundkörperelement 12a, 12b wird der maximale Weg des anderen Grundkörperelements 12a, 12b durch einen entsprechend großen Freiraum begrenzt.

Durch Veränderung der Haftfläche des Schubelements15 an den Grundkörperelementen 12a, 12b wird die Steifigkeit der Pendelstütze bestimmt, wobei eine große Haftfläche zwischen den Aufnahmegehäusen 13 eine höhere Steifigkeit bei vergleichbar geringerer Shorehärte bereitstellt. Durch die beliebig gestaltbaren Aussparungen 17 sind die Freiwege für den jeweiligen Anschlag des anderen Grundkörperelements 12a, 12b beliebig einstellbar.

### Bezugszeichenliste

- 10: Pendelstütze
- 11: Befestigungsmittel
- 12: Grundkörper
- 12a: erstes Grundkörperelement
- 12b: zweites Grundkörperelement
- 13: Aufnahmegehäuse
- 14a,b: Tragkörper
- 15: Schubelement
- 16: ebene Grundfläche
- 17: Aussparung
- 18: Freiraum
- 19: Abwinkelung
- 20: Ummantelung

## Patentansprüche

1. Pendelstütze, insbesondere zur Abstützung eines Motoraggregats, mit zwei voneinander beabstandeten Befestigungsmitteln (11) zur Verbindung von zwei relativ zueinander beweglichen Körpern, wobei ein Grundkörper zwei Grundkörperelemente (12a, 12b) aufweist, die über mindestens ein elastisches Schubelement (15) verbunden sind und mindestens eines der Grundkörperelemente (12a, 12b) eine Aussparung (17) aufweist, in der ein Bereich des anderen Grundkörperelements (12a, 12b) mit Freiweg einliegt, **dadurch gekennzeichnet, dass** der einliegende Bereich als Aufnahmegehäuse (13) für das Befestigungsmittel (11) ausgebildet ist, dass das Grundkörperelement (12a, 12b) eine im Wesentlichen ebene Grundfläche aufweist, von der das Aufnahmegehäuse (13) senkrecht abragt, und dass die Aussparung (17) und das eingreifende Aufnahmegehäuse (13) einen Freiraum (18) bilden.

2. Pendelstütze nach Anspruch 2, **dadurch gekennzeichnet, dass** die Grundkörperelemente (12a, 12b) baugleich ausgebildet sind.

3. Pendelstütze Ansprüche 1 oder 2, **dadurch gekennzeichnet, dass** jedes Grundkörperelement (12a, 12b) eine Aussparung (17) aufweist, in der ein Bereich (13) des gegenüberliegenden Grundkörperelements (12a, 12b) mit Freiweg einliegt.

4. Pendelstütze nach einem der Ansprüche 1 bis 3, **dadurch gekennzeichnet, dass** das Grundkörperelement (12a, 12b) im Bereich der Aussparung (17) eine Abwinklung (19) aufweist, die einen Anschlag für das gegenüberliegende Grundkörperelement (12a, 12b) bildet.

5. Pendelstütze nach einem der Ansprüche 1 bis 4, **dadurch gekennzeichnet, dass** das Schubelement (15) und ein Tragkörper (14), der das Befestigungsmittel (11) elastisch abstützt, an einem eingespritzten Vulkanisationskörper aus elastischem Material ausgebildet sind.

6. Pendelstütze nach einem der Ansprüche 1 bis 5, **dadurch gekennzeichnet, dass** die Grundkörperelemente (12a, 12b) als tiefgezogene Teile aus einem Metallblech hergestellt sind.

7. Pendelstütze nach einem der Ansprüche 1 bis 6, **dadurch gekennzeichnet, dass** das Befestigungsmittel (11) als hohlzylinderförmige Hülse ausgebildet ist.

8. Pendelstütze nach einem der Ansprüche 1 bis 7, **dadurch gekennzeichnet, dass** die Grundkörperelemente (12a, 12b) mit einer Ummantelung (20) aus elastischem Material versehen sind.

## Claims

1. A pendulum support, particularly for supporting an engine assembly comprising two mutually spaced-apart securing means (11) for joining two bodies movable relative to one another; wherein a base body comprising two base body elements (12a, 12b) joined by at least one elastic thrust element (15) and at least one of the base body elements (12a, 12b) comprising a recess (17) in which a portion of the other base body element (12a, 12b) is located with a clearance, **characterized in that** the located portion is configured as a housing (13) receiving the securing means (11), that the base body element (12a, 12b) comprises a substantially flat base surface area from which the housing (13) projects perpendicularly, and that the recess (17) and the engaging housing (13) form a clearance (18).

2. The pendulum support as set forth in claim 2, **characterized in that** the base body elements (12a, 12b) are configured substantially identical.

3. The pendulum support as set forth in claims 1 or 2, **characterized in that** each base body element (12a, 12b) comprises a recess (17) in which a portion (13) of the opposite base body element (12a, 12b) is located with a clearance.

4. The pendulum support as set forth in any of the claims 1 to 3, **characterized in that** the base body element (12a, 12b) comprises in the region of the recess (17) an angular abutment (19) forming a stop for the opposite base body element (12a, 12b).

5. The pendulum support as set forth in any of the claims 1 to 4, **characterized in that** the thrust element (15) and a supporting member (14) for elastically supporting the securing means (11) are configured on a molded vulcanized member of elastic material.

6. The pendulum support as set forth in any of the claims 1 to 5, **characterized in that** the base body elements (12a, 12b) are deep-drawn parts of sheet metal.

7. The pendulum support as set forth in any of the claims 1 to 6, **characterized in that** the securing means (11) is cylindrically tubular sleeves.

8. The pendulum support as set forth in any of the claims 1 to 7, **characterized in that** the base body elements (12a, 12b) are provided with an elastic material sheathing (20).

## Revendications

1. Support pendulaire, en particulier pour supporter un groupe moteur, comprenant deux moyens de fixation (11) à distance l'un de l'autre pour la liaison de deux corps mobiles l'un par rapport à l'autre, dans lequel un corps de base comprend deux éléments de corps de base (12a, 12b) qui sont reliés via au moins un élément de poussée élastique (15), et l'un au moins des éléments de corps de base (12a, 12b) comporte un évidement (17), dans laquelle est engagée une zone de l'autre élément de corps de base (12a, 12b) avec une course libre, **caractérisé en ce que** la zone engagée est réalisée sous forme de boîtier de logement (13) pour le moyen de fixation (11), **en ce que** l'élément de corps de base (12a, 12b) présente une surface de base sensiblement plane, depuis laquelle le boîtier de logement (13) dépasse verticalement, et **en ce que** l'évidement (17) et le boîtier de logement (13) engagé forment un espace libre (18).

2. Support pendulaire selon la revendication 1, **caractérisé en ce que** les éléments de corps de base (12a, 12b) sont réalisés de structure identique.

3. Support pendulaire selon les revendications 1 ou 2, **caractérisé en ce que** chaque élément de corps de base (12a, 12b) comporte un évidement (17) dans laquelle est engagée une zone (13) de l'élément de corps de base opposé (12a, 12b) avec course libre.

4. Support pendulaire selon l'une des revendications 1 à 3, **caractérisé en ce que** l'élément de corps de base (12a, 12b) comporte, dans la zone de l'évidement (17), un coudage (19) qui forme une butée pour l'élément de corps de base opposé (12a, 12b).

5. Support pendulaire selon l'une des revendications 1 à 4, **caractérisé en ce que** l'élément de poussée (15) et un corps porteur (14) qui soutient élastiquement le moyen de fixation (11), sont réalisés sur un corps de vulcanisation injecté en matière élastique.

6. Support pendulaire selon l'une des revendications 1 à 5, **caractérisé en ce que** les éléments de corps de base (12a, 12b) sont réalisés sous forme de pièces embouties, à partir d'une tôle métallique.

7. Support pendulaire selon l'une des revendications 1 à 6, **caractérisé en ce que** le moyen de fixation (11) est réalisé sous forme de douille de forme cylindrique creuse.

8. Support pendulaire selon l'une des revendications 1 à 7, **caractérisé en ce que** les éléments de corps de base (12a, 12b) sont pourvus d'une enveloppe (20) en matériau élastique.
